# EUROPEAN PATENT SPECIFICATION

(11) **EP 3 380 370 B1**
(45) Date of publication and mention of the grant of the patent: **17.06.2020**
(21) Application number: 16829333.0
(22) Date of filing: 25.11.2016
(51) Int. Cl.: B60S 1/34

(54) **A COVER FOR PROTECTING THE WIPER SHAFT**
ABDECKUNG ZUM SCHUTZ DER WISCHERWELLE
COUVERCLE DE PROTECTION D'ARBRE D'ESSUIE-GLACE

(30) Priority: 26.11.2015 TR 201515012
(43) Date of publication of application: 03.10.2018
(73) Proprietor: Mitsuba Teklas Turkey Otomotiv Anonim Sirketi, 41400 Istanbul (TR)
(72) Inventor: AVSAR, Erdal, 41400 Gebze/Kocaeli (TR)
(74) Representative: Atalay, Baris
(86) International application number: PCT/TR2016/000170
(87) International publication number: WO 2017/091174

(56) References cited:
- EP-A1- 0 864 472
- DE-A1- 4 408 732
- DE-A1-102012 210 363
- JP-A- 2001 130 384
- JP-A- 2001 180 449
- US-A1- 2014 182 076

## Description

### Related Technical Field

The present invention relates to a protective cover that can be mounted to the wiper arm in order to protect the wiper shaft in the wiper systems of the motor vehicles against external effects such as water, dust, etc.

### State of the Art

The wiper systems used in the motor vehicles generally comprise a wiper blade in contact with
the windshield to wipe the windshield surface, a wiper arm to which the said wiper blade is connected, a motor for moving the wiper blade forwards and backwards over the windshield and a shaft, one end of which is connected to the said motor by means of connection members and the other end of which is connected to the wiper arm. By means of this arrangement, the
movement provided by the motor is transmitted to the wiper blade by means of the shaft and the wiper arm.

The wiper arms generally have an articulated structure comprising an arm body connected to the wiper blade by means of intermediate connection members and an arm connection member connected to the shaft. In the patent document no US5894628, connection of an arm
connection member produced from cast metal with a wiper shaft is disclosed. In this arrangement, a housing wherein the shaft is placed is provided on the arm connection member. The side walls of the arm connection member have a cylindrical skirt-shaped structure that is extended towards the shaft bearing so as to surround all around the shaft and the housing. The said skirt-shaped structure protects the shaft against external effects such as water, dust, etc.

However, instead of wiper arms produced from cast metal, arms produced from sheet metal
are extensively used in the motor vehicles. In the wiper arms produced from sheet metal, a skirt-shaped member surrounding and protecting the shaft as described above cannot be
obtained as integrated with the arm connection member due to difficulties encountered during the production process. In the connection between the arm connection member produced from sheet metal and the shaft, one end of the arm is open, and due to this opening, the shaft cannot be protected against external effects.

In the patent document no JP2001130384, an arrangement protecting the connection between the arm connection members produced from sheet metal and the shaft against external effects is disclosed. In this arrangement, an iron support member is used in order to prevent the structural damage that may occur in the housing while the shaft is mounted into the housing on the arm connection member. The member is composed of a ring providing the connection thereof with the housing and of a cylindrical skirt portion that is longer than the housing. The said skirt portion closes the gap between the shaft bearing and the arm connection member and protects the shaft against external effects. The support member is fitted into the housing so as to surround the outer surface of the housing. Thanks to the uneven configuration of the outer surface of the housing, the support member is fixed to the housing. By means of this
arrangement, the connection between the arm connection member and the shaft can be isolated from external effects. However, nowadays, metal members used on the motor vehicles are replaced with plastic members in order to lighten the motor vehicles. In case the said support member is produced from plastic, the connection that is provided with the uneven outer surface of the housing will not be safe.

In the patent document no. JP2001180449, an external protective member in the form of a skirt instead of a skirt-shaped structure integrated with the housing is disclosed. The protective member is mounted to the side wall of the arm connection member by means of methods such as adhesion, welding, etc. However, the said mounting method is not cost-effective or easily-applicable. In the patent document, it is alternatively disclosed that the protective member can be mounted to a ring-shaped metal support member. The metal support member is fitted over the outer surface of the housing formed in the arm connection member. The mounting process is realized by means of press-fitting or by means of claws provided on the protective member. However, since this arrangement necessitates the use of metal support member, it
cannot be adapted to every wiper system. Moreover, it is disadvantageous in terms of weight.

In the patent document no. EP0864472, a plastic protective member that covers the gap between the shaft bearing and the wiper arm to protect the shaft against external effects is disclosed. The protective member is composed of two connection ends and a body formed between the ends. One end of the protective member is fixed to the arm connection member.

The other connection end is placed and fixed into the gap between the shaft and the shaft bearing. The body between the two ends covers the said gap, thus protecting the shaft. However, in the arrangement, both ends of the protective member should be fixed. Therefore, the arrangement does not provide a practical mounting process. Moreover, which method should be used for fixing the protective member is not disclosed in the patent document. EP 0 864 472 A1 discloses the preamble of claim 1.

In the patent document no. DE102012210363, a device which has a protective cap resting against an outer surface of a wiper shaft, which is rotatably received in a housing-side bearing bush is disclosed. The protective cap is mounted on the wiper shaft. The protective cap is designed as a clamping sleeve, which is axially firmly connected with the wiper shaft and fixes the wiper shaft in an axial position in the bearing bush. A water protection collar is integrally formed with the clamping sleeve and embraces a front end of the bearing bush. The clamping sleeve is formed as a plastic construction part.

By means of the present invention, a light plastic protective cover that can be easily mounted to the wiper arm in order to protect the wiper shaft in the wiper systems of the motor vehicles against external effects such as water, dust, etc. is disclosed.

The present invention is explicated below in detail with reference to the figures.
Figure 1 is the isometric view of the wiper system.
Figure 2a is the isometric view of the arm connection member produced from sheet metal.
Figure 2b is the cross-sectional view of the arm connection member produced from sheet metal.
Figure 3 is the isometric view of the protective cover of the present invention.
Figure 4a is the exploded view of the arm connection member and the protective cover of the present invention.
Figure 4b is the cross-sectional view of3 the connection of the arm connection member and
   the protective cover of the present invention.
Figure 4c is another cross-sectional view of the connection of the arm connection member and the protective cover of the present invention.
Figure 4d is the detailed view of the long lateral wall of the protective cover and the upper wall of the arm connection member.
Figure 4e is the detailed view of the short lateral wall of the protective cover and the side wall of the arm connection member.
Figure 5a is the cross-sectional view of the connection of the arm connection member and shaft when the protective cover of the present invention is not used.
Figure 5b is the cross-sectional view of the connection of the arm connection member and shaft when the protective cover of the present invention is used.
Figure 6a is the isometric view of the alternative arrangement of the protective cover of the present invention.
Figure 6b is the cross-sectional view of the alternative arrangement of the arm connection member and the protective cover of the present invention.
Figure 7a is the isometric view of the second alternative arrangement of the protective cover of the present invention.
Figure 7b is the cross-sectional view of the second alternative arrangement of the arm connection member and the protective cover of the present invention.
Figure 8 is the cross-sectional view of the third alternative arrangement of the arm connection member and the protective cover of the present invention.

The elements related to the present invention are numbered as follows in the above-described figures:

| | |
|---|---|
| Wiper System | 1 |
| Wiper Blade | 2 |
| Wiper Arm | 3 |
| Arm Body | 31 |
| Arm Connection member | 32 |
| Arm Connection member Side Wall | 321 |
| Arm Connection member Side Wall Lower | |
| Surface 3210 | |
| Arm Connection member Side Wall Outer | |
| Surface 3211 | |
| Arm Connection member Side Wall Inner | |
| Surface | 3212 |
| Opening | 3213 |
| Arm Connection member Upper Wall | 322 |
| Arm Connection member Side Wall Inner | |
| Surface | 3220 |
| Protective Cover | 4,4¹,4",4"¹ |
| Skirt | 41,41¹,41" |
| Skirt Outer Surface | 410¹,410" |
| Short Lateral Wall | 411,411¹,411" |
| Short Lateral Wall Upper Surface | 4110 |
| Long Lateral Wall | 412,412¹,412" |
| Long Lateral Wall Upper Surface | 4120 |
| Connection Arm | 42,42¹,42" |
| Vertical Bearing surface | 420 |
| Horizontal Bearing surface | 421 |
| Base | 422',422" |
| Body | 423,423¹,423" |
| Claw | 424',424" |
| Ring | 43 |
| Shaft | 5 |
| Connection Portion | 50 |
| Conic Part | 51 |
| End Part | 52 |
| Housing | 6 |
| Hole | 60 |
| Hole Wall | 61 |
| Shaft Bearing | 7 |
| Shaft Bearing End Point | 70 |
| Peripheral Gap | A |

### Detailed Description of the Invention

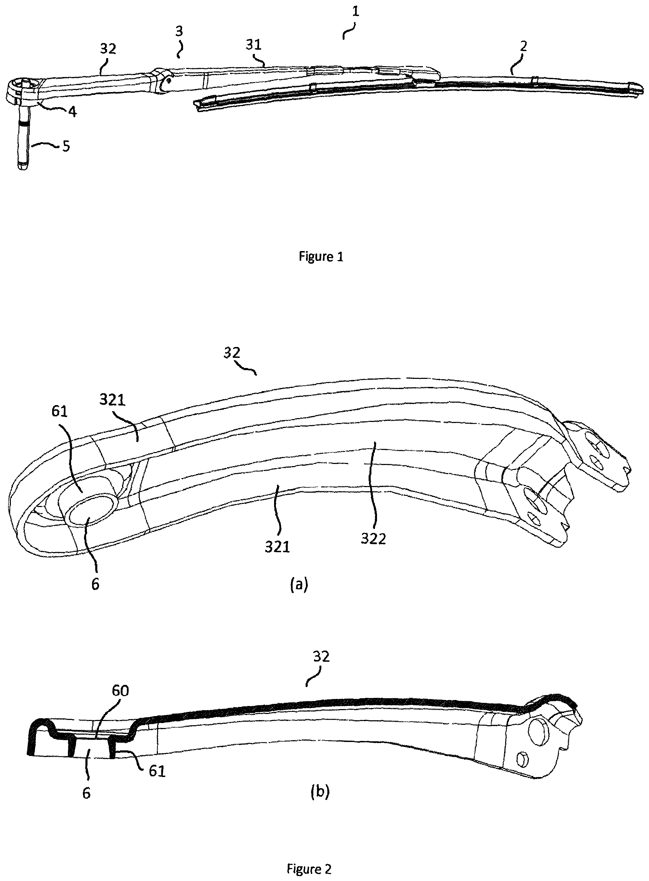

Figure 1 shows a wiper system (1) to which the plastic protective cover (4) of the present invention is connected. The wiper system (1) comprises a wiper blade (2), a wiper arm (3) to which the said wiper blade (2) is connected and a shaft (5) that is connected to the arm (3) to transmit the movement provided by the motor to the arm (3) and the wiper blade (2). The protective cover (4) of the present invention is mounted to the end of the wiper arm (3) connected to the shaft (5) and surrounds and protects the shaft-arm (5, 3) connection against external effects.

The wiper arm (3) generally have an articulated structure comprising an arm body (31) connected to the wiper blade (2) and an arm connection member (32) connected to the shaft (5). Therefore, in this description, the invention will be disclosed through the connection of the arm connection member (32) and the shaft (5). However, it is clear that the cover (4) of the present invention can be used in the region where the arm (3) is connected to the shaft (5) in any alternative arm arrangements that do not comprise an arm connection member (32). Figure 2 shows the cross-sectional and the isometric views of the arm connection member (32) to which the protective cover (4) of the present invention is mounted. The arm connection member (32) with a U-shaped cross-section, produced from sheet metal is composed of two side walls (321) and an upper wall (322). A housing (6) wherein the shaft (5) can be mounted is provided in the arm connection member (32). The housing (6) is formed by means of a hole (60) provided on the upper wall (322) of the connection member (32) and by extending the wall (61) of the said hole (6) towards the shaft (5).

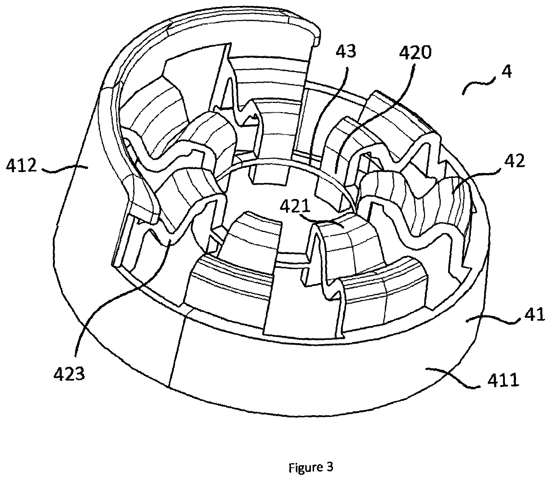

Figure 3 shows the isometric view of the protective cover (4) of the present invention. The protective cover (4) is a plastic single piece comprising a skirt (41) and at least one, preferably more than one flexible connection arm (42) integrated to the said skirt (41). The skirt (41) is preferably in the form of a hollow cylinder. The lateral walls (411, 412) forming the skirt (41) are provided as a short one (411) at a region and a long one (412) at another region. After the mounting process, the short lateral wall (411) is preferably in contact with the side walls (321) of the arm connection member (32) and the long lateral wall (421) is in contact with the upper wall (322) of the arm connection member (32).

The flexible arms (42) extend from the lateral walls (411, 412) of the skirt (41) with which the arms (42) are integrated towards the center of the skirt (41). The end of the arms (42) are preferably integrated with an inner ring (43). The hollow annular inner ring (43) provided at the center of the protective cover (4) is formed as a single piece with the protective cover (4). The
flexible connection arms (42) have a configuration that can stretch without any damage during the mounting process. Therefore, in the preferred arrangement of the present invention, the arms (42) has a S-shaped serpentine body (423) having at least one bend. However, in the alternative arrangements of the present invention, the body (423) may have a flexible configuration in form of V, Z, etc. Preferably, horizontal bearing surfaces (421) are provided on
the arms (42). Moreover, a vertical bearing surface (420) is preferably provided at the end of each arm (42).

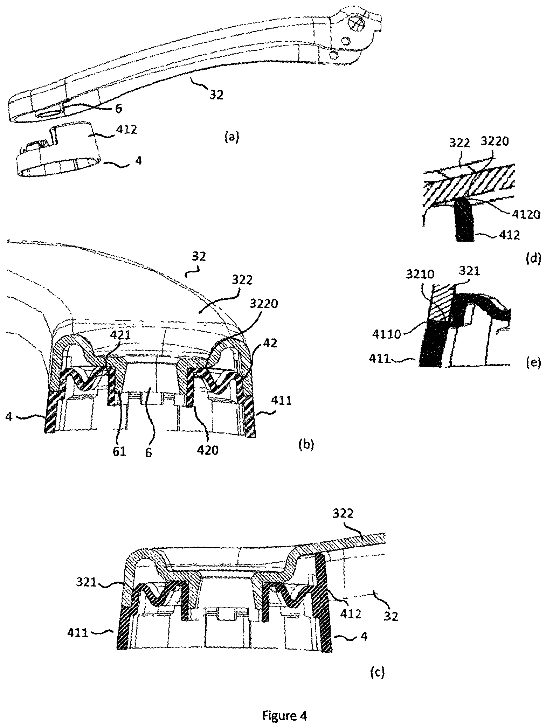

Figure 4a shows the exploded view of the protective cover (4) before being mounted to the arm connection member (43), and Figure 4b and 4c show the cross-sectional views of the protective cover (4) in the mounted state to the arm connection member (32). The protective cover (4) is mounted to the housing (6) by being pushed from the open lower side of the arm
connection member (32) having a U cross-section. In the mounted state, the bearing surfaces (421) of the flexible arms (42) bear against the inner surface (3220) of the upper wall (322) of the arm connection member (32). During the mounting process, as the arms (42) are stretched and compressed some thanks to the flexible structure thereof, the vertical bearing surfaces (420) engage with the wall (61) of the hole (60). As the arms (42) try to return to their initial
state like a spring, the said vertical bearing surfaces (420) peripherally grip the wall (61) of the hole (60), thus enabling the protective cover (4) to be snap-fitted to the housing (6). As shown in detail in Figure 4d and 4e, the upper surface (4110) of the short lateral wall (411) of the cover (4) mounted to the arm connection member (32) bears against the lower surface (3210) of the side wall (321) of the arm connection member (32) while the upper surface (4120) of the long
lateral wall (412) bears against the inner surface (3220) of the upper wall (322) of the arm connection member (32).

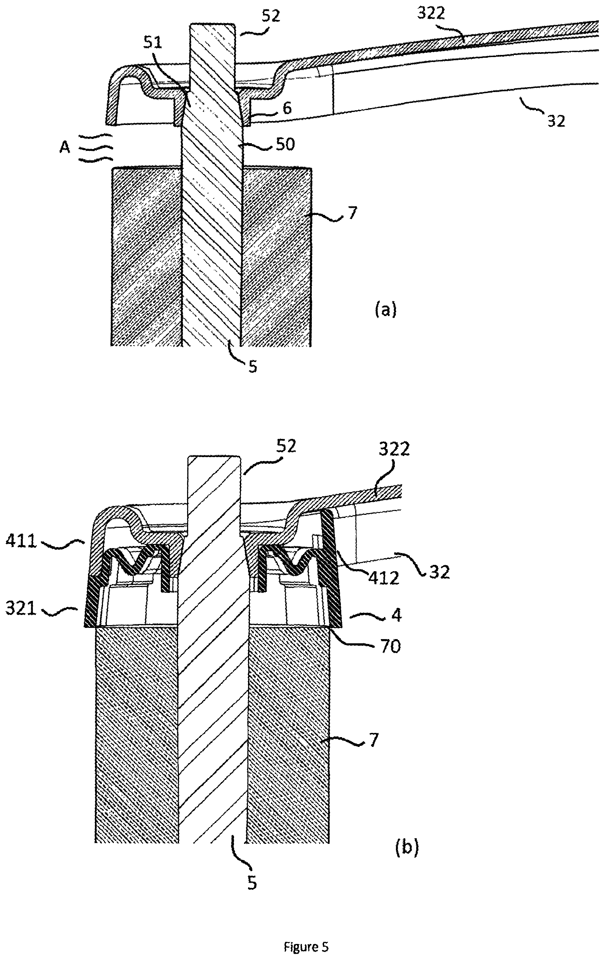

Figure 5a shows the cross-sectional view of the shaft-arm (5, 3) connection wherein the protective cover (4) is not used, and Figure 5b shows the shaft-arm (5, 3) connection to which
the protective cover (4) is mounted. The shaft (5) is fitted into a shaft bearing (7) and has a connection portion (50) protruding from the said bearing (7). The conic part (51) of the connection part (50) is fitted into the housing (6). The end (52) of the connection part (50) protrudes from the housing (6) and goes beyond the arm connection member (32). The end (52) of the shaft (5) remaining over the arm connection member (32) is fixed to the arm
connection member (32) by means of members (not shown in figures) such as nut, etc. As shown in Figure 5a, in the case the plastic protective cover (4) is not used, a peripheral gap (A) wherein the shaft (5) is unprotected against external effects such as rain, dust, moisture, etc. is formed between the shaft bearing (7) and the arm connection member (32).

As shown in Figure 5b, the side walls (411, 412) of the protective cover (4) cover the gap (A) between the arm connection member (32) and the end point (70) of the shaft bearing (7) and isolates the connection between the shaft (5) and the wiper arm connection member (32) from external effects. Thus, the shaft (5) is protected against external factors such as rain, dust, moisture, etc.

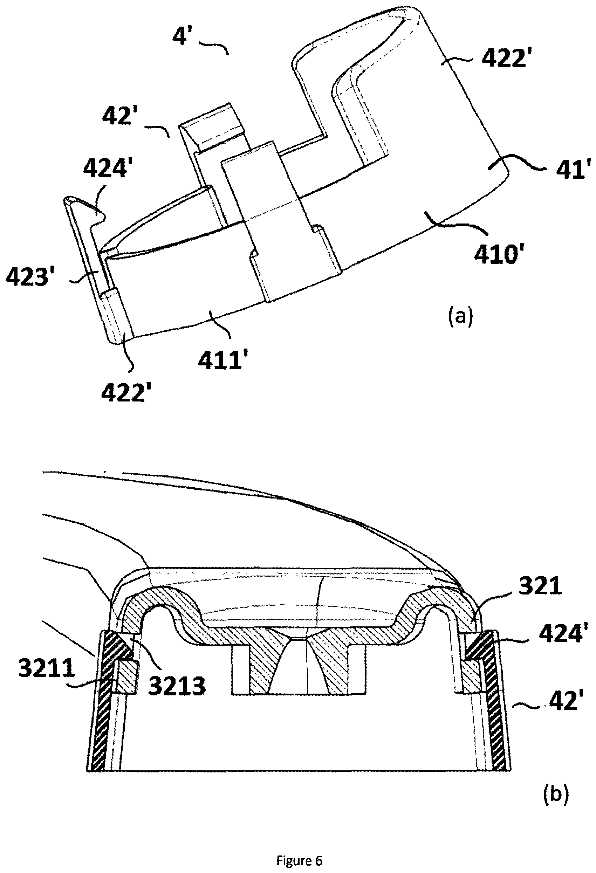

Figure 6 shows an alternative arrangement of the protective cover (4') of the present invention. The protective cover (4') is a plastic single piece comprising a skirt (41') and at least one connection arm (42') integrated to the said skirt (41'). The connection arm (42') comprises a base (422') integrated with the outer surface (410') of the skirt (41'), a body (423') extending upwards from the said skirt (41') and a claw (424') provided at the end of the said body (423'). The base (422') of the connection member (42') extends outwards from the outer surface (410')
of the skirt (41'). The protective cover (4') has preferably three connection arms (42'). The claw (424') is preferably a protrusion with a triangular cross-section extending towards the center of the skirt (41'). Similar to the preferred arrangement of the present invention, the part of the hollow cylinder-shaped skirt (41') in contact with the side walls (321) of the arm connection member (32) has a short lateral wall (411') and the part thereof in contact with the upper wall
(322) of the arm connection member (32) has a long lateral wall (412'). As shown in Figure 6b, openings (3212) preferably with rectangular cross-sections for receiving the claws (424') are provided on the side wall (321) of the arm connection member (32). The claws (424') enter through the outer surface (3211) of the side wall (321) of the arm connection member (32) and engage with the said openings (3213), thus realizing the connection of the connection arm
member (32)-the protection cover (4').

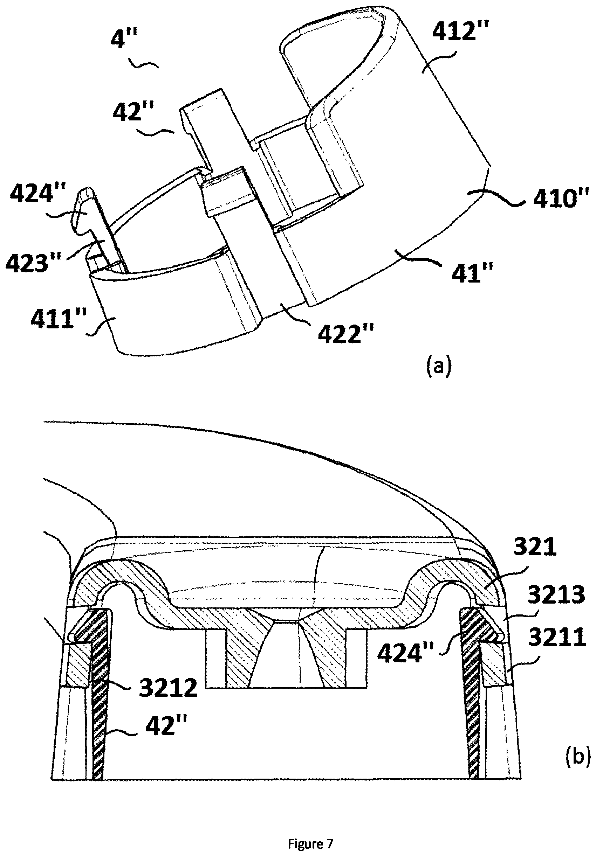

Figure 7 shows another alternative arrangement of the protective cover (4") of the present invention. In this arrangement, differently from the protective cover (4') of the previous arrangement, the base (422") of the connection member (42") extends inwards from the outer surface (410") of the skirt (41"). The claws (424") extend outwards from the skirt (41"). The claws (424") enter through the inner surface (3212) of the side wall (321) of the arm connection member (32) and engage with the openings (3213), thus realizing the connection of the connection arm member (32)-the protection cover (4").

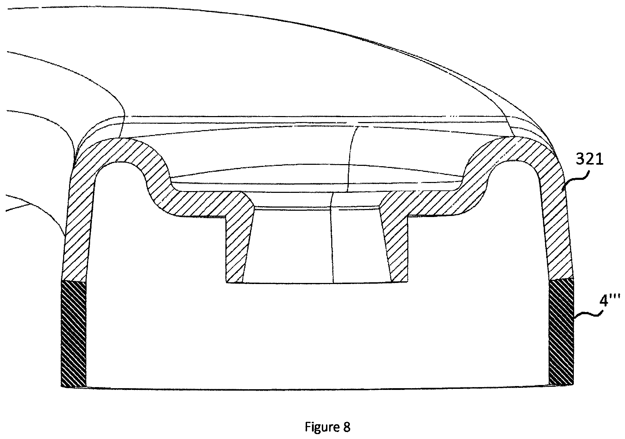

The protective cover (4'") of the present invention with its alternative arrangement shown in Figure 8 is obtained by applying plastic injection on the lower surface (3210) off the side walls (321) of the arm connection member (32). Thus, no additional connection member is required.

The protective cover (4, 4', 4", 4"') of the present invention is preferably produced by the plastic injection method. However, alternatively different state of the art production methods known can be used. The protective cover (4, 4', 4", 4"') can be produced from a thermoplastic
material such as polyamide (PA), polyphthalamide (PPA), polyphenylene sulphide (PPS), polypropylene (PP), polyethylene (PE), thermoplastic elastomer (TPE), etc.

Although the connection arms (42,42',42") of the protective arm (4, 4', 4") can be provided in serpentine form, the said arms (42,42',42") can be provided in flat or different forms in
different embodiments. The said connection arms (42, 42', 42") can be arranged on the protective cover (4, 4', 4") at equal or different angular intervals. The number of the arms (42, 42', 42") provided on the protective cover (4, 4', 4") is preferably between 3 and 12; however, the said number can be increased or decreased according to the embodiment.

## Claims

1. A plastic protective cover (4, 4', 4") that is used in a wiper system (1) comprising a wiper blade (2) in contact with the windshield to wipe the windshield surface, a wiper arm (3) to which the said wiper blade (2) is connected, a motor for moving the wiper blade (2) forwards and backwards over the windshield and a shaft (5), one end of which is connected to the said motor by means of connection members and the other end of which is connected to the wiper arm (3), the protective cover (4, 4', 4") protecting the connection between the said wiper arm (3) and the said shaft (5) against external effects and comprising a skirt (41, 41', 41") and at least one connection arm (42, 42', 42") connected to the wiper arm (3) and integrated with the said skirt (41, 41', 41"), the plastic protective cover being **characterised in that** the side walls (411, 411', 411", 412, 412', 412") forming the said skirt (41,41',41") are provided as a short side wall (411, 411', 411") at a region and a long side wall (412, 412', 412") at another region.

2. A plastic protective cover (4, 4', 4") as in Claim 1, **characterized in that** the said wiper arm (3) comprises an arm body (31) connected to the wiper blade (2) and an arm connection member (32) connected to the shaft (5).

3. A plastic protective cover (4, 4', 4") as in the previous claim, **characterized in that** the said arm connection member (32) is a structure with a U-shaped cross-section composed of two side walls (321) and an upper wall (322).

4. A plastic protective cover (4, 4', 4") as in any one of the above claims, **characterized in that** the said skirt (41,41',41") is preferably in the form of a hollow cylinder.

5. A plastic protective cover (4, 4', 4") as in the previous claim, **characterized in that** the said connection arm (42) extends from the side walls (411, 412) of the skirt (41) towards the center of the skirt (41).

6. A plastic protective cover (4) as in any one of the above claims, **characterized in that** a vertical bearing surface (420) is provided at the end of the said connection arm (42).

7. A plastic protective cover (4) as in any one of the above claims, **characterized in that** a horizontal bearing surface (421) is provided on the said connection arm (42).

8. A plastic protective cover (4) as in any one of the above claims, **characterized in that** the said connection arm (42) has a configuration that can stretch without being damaged during the mounting process.

9. A plastic protective cover (4) as in the previous claim, **characterized in that** the said connection arm (42) has a serpentine body (423) having at least one bend.

10. A plastic protective cover (4) as in any one of the above claims, **characterized in that** the end of the said connection arm (42) is integrated with an inner ring (43).

11. A plastic protective cover (4) as in the previous claim, **characterized in that** the said inner ring (43) has an annular hollow structure.

12. A plastic protective cover (4) as in the previous claim, **characterized in that** the plastic protective cover (4) is snap-fittingly mounted to a housing (6) provided on the said arm connection member (32).

13. A plastic protective cover (4) as in the previous claim, **characterized in that** the plastic protective cover (4) is mounted to the said housing (6) by being pushed from the open lower side of the said arm connection member (32).

14. A plastic protective cover (4) as in any one of the above claims, **characterized in that** the said housing (6) is composed of a hole (60) provided on the upper wall (322) of the arm connection member (32) and of a wall (61) of the hole (60) extending towards the shaft (5).

15. A plastic protective cover (4) as in the previous claim, **characterized in that** the vertical bearing surfaces (420) engage with the wall (61) of the hole (60) during the mounting process, as the arms (42) are stretched and compressed some thanks to the flexible structure thereof.

16. A plastic protective cover (4) as in the previous claim, **characterized in that** the vertical bearing surfaces (420) peripherally grip the wall (61) of the hole (60) as the arms (42) compressed during the mounting process try to return to their initial state like a spring.

17. A plastic protective cover (4) as in any one of the above claims, **characterized in that** in the mounted state, the said horizontal bearing surfaces (421) bear against the inner surface (3220) of the upper wall (322) of the arm connection member (32).

18. A plastic protective cover (4) as in any one of the above claims, **characterized in that** in the mounted state, the upper surface (4110) of the said short lateral wall (411) bear against the lower surface (3210) of the side wall (321) of the arm connection member (32) and the upper surface (4120) of the said long lateral wall (412) bears against the inner surface (3220) of the upper wall (322) of the arm connection member (32).

19. A plastic protective cover (4) as in any one of the above claims, **characterized in that** in the mounted state, the said side walls (411, 412) cover the gap (A) between the arm connection member (32) and the end point (70) of the shaft bearing (7) and isolates the connection between the shaft (5) and the wiper arm connection member (32) from external effects.

20. A plastic protective cover (4', 4") as in Claim 2 or Claim 3, **characterized in that** the said connection arm (42', 42") comprises a base (422', 422") integrated with the outer surface (410', 410") of the skirt (41', 41"), a body (423', 423") extending upwards from the said skirt (41', 41") and a claw (424', 424") provided at the end of the said body (423', 423").

21. A plastic protective cover (4') as in Claim 21, **characterized in that** the said claw (424') is a protrusion extending towards the center of the said skirt (41')

22. A plastic protective cover (4") as in Claim 21, **characterized in that** the said claw (424") is a protrusion extending outside the said skirt (41")

23. A plastic protective cover (4') as in Claim 22, **characterized in that** the plastic protective cover (4') is connected to the arm connection member (32) as the said claws (424') enter through the outer surface (3211) of the side wall (321) of the arm connection member (32) and engage with the openings (3213) provided on the side wall (321).

24. A plastic protective cover (4") as in Claim 23, **characterized in that** the plastic protective cover (4") is connected to the arm connection member (32) as the said claws (424") enter through the inner surface (3211) of the side wall (321) of the arm connection member (32) and engage with the openings (3213) provided on the side wall (321).

25. A plastic protective cover (4, 4', 4") as in any one of the above claims, **characterized in that** the plastic protective cover (4, 4', 4") is produced by the plastic injection method.

26. A plastic protective cover (4, 4', 4", 4"') as in any one of the above claims, **characterized in that** the plastic protective cover (4, 4', 4") is produced from a thermoplastic material such as polyamide (PA), polyphthalamide (PPA), polyphenylene sulphide (PPS), polypropylene (PP), polyethylene (PE), thermoplastic elastomer (TPE), etc.

27. A plastic protective cover (4, 4', 4") as in any one of the above claims, **characterized in that** the said connection arms (42, 42', 42") are arranged at equal angular intervals.

28. A plastic protective cover (4, 4', 4") as in any one of the above claims, **characterized in that** the said connection arms (42, 42', 42") are arranged at different angular intervals.

29. A plastic protective cover (4, 4', 4") as in any one of the above claims, **characterized in that** the number of the said connection arms (42, 42', 42") is between 3 and 12.

## Patentansprüche

1. Schutzdeckel aus Kunststoff (4, 4', 4") welcher in einem Wischersystem (1) benutzt wird, aufweisend: ein Wischerblatt (2) in Kontakt mit der Windschutzscheibe um die Oberfläche der Windschutzscheibe zu wischen, einen Wischerarm (3) an den dieses Wischerblatt (2) verbunden ist, einen Motor um das Wischerblatt (2) auf der Windschutzscheibe vorwärts und rückwärts zu bewegen und einen Schaft (5) wovon ein Ende an diesen Motor mittels Verbindungselemente verbunden ist und wovon das andere Ende an den Wischerarm (3) verbunden ist,
wobei der Schutzdeckel (4, 4', 4") die Verbindung zwischen diesem Wischerarm (3) und diesem Schaft (5) gegen äußere Einflüsse schützt und eine Schürze (41, 41', 41") und mindestens einen Verbindungsarm (42, 42', 42") aufweist der an den Wischerarm (3) verbunden und mit dieser Schürze (41, 41', 41") integriert ist,
der Schutzdeckel aus Kunststoff ist **dadurch gekennzeichnet dass** die Seitenwandungen (411, 411', 411", 412, 412', 412") die diese Schürze (41,41',41") bilden in einem Bereich als eine kurze Seitenwandung (411, 411', 411") und in einem anderen Bereich als eine lange Seitenwandung (412, 412', 412") vorliegen.

2. Schutzdeckel aus Kunststoff (4, 4', 4") gemäß Anspruch 1, **dadurch gekennzeichnet, dass** dieser Wischerarm (3) einen Armrumpf (31) aufweist der an das Wischerblatt (2) verbunden ist und ein Armverbindungselement (32) aufweist das an den Schaft (5) verbunden ist.

3. Schutzdeckel aus Kunststoff (4, 4', 4") gemäß dem vorhergehenden Anspruch, **dadurch gekennzeichnet, dass** dieses Armverbindungselement (32) eine Struktur mit U-förmigem Querschnitt hat, die aus zwei Seitenwandungen (321) und einer oberen Wandung (322) besteht.

4. Schutzdeckel aus Kunststoff (4, 4', 4") gemäß irgendeinem der vorhergehenden Ansprüche, **dadurch gekennzeichnet, dass** diese Schürze (41,41',41") vorzugsweise die Form eines Hohlzylinders hat.

5. Schutzdeckel aus Kunststoff (4, 4', 4") gemäß dem vorhergehenden Anspruch, **dadurch gekennzeichnet, dass** dieser Verbindungsarm (42) sich von den Seitenwandungen (411, 412) der Schürze (41) aus, in Richtung des Mittelpunkts der Schürze (41) erstreckt.

6. Schutzdeckel aus Kunststoff (4) gemäß irgendeinem der vorhergehenden Ansprüche, **dadurch gekennzeichnet, dass** am Ende dieses Verbindungsarms (42) eine vertikale Stützfläche (420) vorgesehen ist.

7. Schutzdeckel aus Kunststoff (4) gemäß irgendeinem der vorhergehenden Ansprüche, **dadurch gekennzeichnet, dass** auf diesem Verbindungsarm (42) eine horizontale Stützfläche (421) vorgesehen ist.

8. Schutzdeckel aus Kunststoff (4) gemäß irgendeinem der vorhergehenden Ansprüche, **dadurch gekennzeichnet, dass** dieser Verbindungsarm (42) so gestaltet ist, dass er sich während des Montageprozesses ohne Beschädigung dehnen kann.

9. Schutzdeckel aus Kunststoff (4) gemäß dem vorhergehenden Anspruch, **dadurch gekennzeichnet, dass** dieser Verbindungsarm (42) einen schlangenförmigen Rumpf (423) mit mindestens einer Biegung hat.

10. Schutzdeckel aus Kunststoff (4) gemäß irgendeinem der vorhergehenden Ansprüche, **dadurch gekennzeichnet, dass** am Ende dieses Verbindungsarms (42) ein innerer Ring (43) integriert ist.

11. Schutzdeckel aus Kunststoff (4) gemäß dem vorhergehenden Anspruch, **dadurch gekennzeichnet, dass** dieser innere Ring (43) eine kreisförmige hohle Struktur aufweist.

12. Schutzdeckel aus Kunststoff (4) gemäß dem vorhergehenden Anspruch, **dadurch gekennzeichnet, dass** der Schutzdeckel aus Kunststoff (4) an einem, an diesem Armverbindungselement (32) vorgesehenen Gehäuse (6), durch Einrastung montiert ist.

13. Schutzdeckel aus Kunststoff (4) gemäß dem vorhergehenden Anspruch, **dadurch gekennzeichnet, dass** der Schutzdeckel aus Kunststoff (4) an diesem Gehäuse (6) durch Drücken von der offenen unteren Seite dieses Armverbindungselements (32) montiert ist.

14. Schutzdeckel aus Kunststoff (4) gemäß irgendeinem der vorhergehenden Ansprüche, **dadurch gekennzeichnet, dass** dieses Gehäuse (6) aus einer Wandung (61) besteht, die sich von einem an der oberen Wandung (322) des Armverbindungselements (32) vorgesehenen Loch (60) aus zum Schaft (5) hin erstreckt.

15. Schutzdeckel aus Kunststoff (4) gemäß dem vorhergehenden Anspruch, **dadurch gekennzeichnet, dass** die vertikalen Stützflächen (420) während des Montageprozesses in die Wandung (61) des Lochs (60) eingreifen, während die Arme (42) aufgrund ihrer gewissen flexiblen Struktur gedehnt und zusammengedrückt werden.

16. Schutzdeckel aus Kunststoff (4) gemäß dem vorhergehenden Anspruch, **dadurch gekennzeichnet, dass** die vertikalen Stützflächen (420) die Wandung (61) des Lochs (60) umfänglich greifen, da die während des Montageprozesses zusammengedrückten Arme (42) versuchen federartig ihren Initialzustand wieder einzunehmen.

17. Schutzdeckel aus Kunststoff (4) gemäß irgendeinem der vorhergehenden Ansprüche, **dadurch gekennzeichnet, dass** im montierten Zustand diese horizontalen Stützflächen (421) gegen die Innenseite (3220) der oberen Wandung (322) des Armverbindungselements (32) drücken.

18. Schutzdeckel aus Kunststoff (4) gemäß irgendeinem der vorhergehenden Ansprüche, **dadurch gekennzeichnet dass** im montierten Zustand, die Oberseite (4110) dieser kurzen Seitenwandung (411) gegen die Unterseite (3210) der Seitenwandung (321) des Armverbindungselements (32) drückt und die Oberseite (4120) dieser langen Seitenwandung (412) gegen die Innenseite (3220) der oberen Wandung (322) des Armverbindungselements (32) drückt.

19. Schutzdeckel aus Kunststoff (4) gemäß irgendeinem der vorhergehenden Ansprüche, **dadurch gekennzeichnet dass** im montierten Zustand, diese Seitenwandungen (411, 412) die Lücke (A) zwischen dem Armverbindungselement (32) und dem Endpunkt (70) des Schaftlagers (7) abdecken und die Verbindung zwischen dem Schaft (5) und dem Verbindungselement (32) des Wischerarms gegen äußere Einflüsse isolieren.

20. Schutzdeckel aus Kunststoff (4', 4") gemäß Anspruch 2 oder Anspruch 3, **dadurch gekennzeichnet dass** dieser Verbindungsarm (42', 42") eine mit der Außenseite (410', 410") der Schürze (41', 41") integrierten Basis (422', 422"), einen sich von dieser Schürze (41', 41") aus aufwärts erstreckenden Rumpf (423', 423") und eine am Ende dieses Rumpfs (423', 423") vorgesehene Kralle (424', 424") aufweist.

21. Schutzdeckel aus Kunststoff (4') gemäß Anspruch 21, **dadurch gekennzeichnet, dass** diese Kralle (424') ein sich in Richtung des Mittelpunkts dieser Schürze (41') erstreckender Vorsprung ist.

22. Schutzdeckel aus Kunststoff (4") gemäß Anspruch 21, **dadurch gekennzeichnet, dass** diese Kralle (424") ein sich außerhalb dieser Schürze (41") erstreckender Vorsprung ist.

23. Schutzdeckel aus Kunststoff (4') gemäß Anspruch 22, **dadurch gekennzeichnet, dass** der Schutzdeckel aus Kunststoff (4') an das Armverbindungselement (32) dann verbunden ist, wenn diese Krallen (424') über die Außenseite (3211) der Seitenwandung (321) des Armverbindungselements (32) eindringen und in die, an der Seitenwandung (321) vorgesehenen Öffnungen (3213) eingreifen.

24. Schutzdeckel aus Kunststoff (4") gemäß Anspruch 23, **dadurch gekennzeichnet, dass** der Schutzdeckel aus Kunststoff (4") an das Armverbindungselement (32) dann verbunden ist, wenn diese Krallen (424") über die Innenseite (3212) der Seitenwandung (321) des Armverbindungselements (32) eindringen und in die, an der Seitenwandung (321) vorgesehenen Öffnungen (3213) eingreifen.

25. Schutzdeckel aus Kunststoff (4, 4', 4") gemäß irgendeinem der vorhergehenden Ansprüche, **dadurch gekennzeichnet, dass** der Schutzdeckel aus Kunststoff (4, 4', 4") durch Kunststoffspritzverfahren hergestellt ist.

26. Schutzdeckel aus Kunststoff (4, 4', 4", 4"') gemäß irgendeinem der vorhergehenden Ansprüche, **dadurch gekennzeichnet, dass** der Schutzdeckel aus Kunststoff (4, 4', 4") aus einem thermoplastischen Material wie Polyamide (PA), Polyphthalamid (PPA), Polyphenylensulfid (PPS), Polypropylen (PP), Polyethylene (PE), thermoplastisches Elastomer (TPE), usw. hergestellt ist

27. Schutzdeckel aus Kunststoff (4, 4', 4") gemäß irgendeinem der vorhergehenden Ansprüche, **dadurch gekennzeichnet, dass** diese Verbindungsarme (42, 42', 42") in gleichen Winkelabständen angeordnet sind.

28. Schutzdeckel aus Kunststoff (4, 4', 4") gemäß irgendeinem der vorhergehenden Ansprüche, **dadurch gekennzeichnet, dass** diese Verbindungsarme (42, 42', 42") in ungleichen Winkelabständen angeordnet sind.

29. Schutzdeckel aus Kunststoff (4, 4', 4") gemäß irgendeinem der vorhergehenden Ansprüche, **dadurch gekennzeichnet, dass** die Anzahl dieser Verbindungsarme (42, 42', 42") zwischen 3 und 12 ist.

## Revendications

1. Couvercle protecteur en plastique (4, 4', 4") utilisé dans un système d'essuyage (1) comprenant un balai d'essuie-glace (2) en contact avec le pare-brise pour essuyer la surface du pare-brise ; un bras d'essuie-glace (3) auquel ledit balai d'essuie-glace (2) est lié ; un moteur pour bouger le balai d'essuie-glace (2) vers l'avant et vers l'arrière sur le pare-brise ; et
un arbre (5), dont une extrémité est liée audit moteur au moyen des éléments de liaison et l'autre extrémité est liée au bras d'essuie-glace (3) ;
le couvercle protecteur (4, 4', 4") protégeant la liaison entre ledit bras d'essuie-glace (3) et ledit arbre (5) contre les effets externes et comprenant une jupe (41, 41', 41") et au moins un bras de liaison (42, 42', 42") lié au bras d'essuie-glace (3) et intégré à la jupe (41, 41', 41"),
le couvercle protecteur en plastique étant **caractérisé en ce que** les parois latérales (411, 411', 411", 412, 412', 412") formant ladite jupe (41,41',41") sont prévues dans une zone comme une paroi latérale courte (411, 411', 411") et dans une autre zone comme une paroi latérale longue (412, 412', 412").

2. Couvercle protecteur en plastique (4, 4', 4") selon la revendication 1, **caractérisé en ce que** ledit bras d'essuie-glace (3) comprend un corps de bras (31) lié au balai d'essuie-glace (2) et un élément de liaison du bras (32) lié à l'arbre (5).

3. Couvercle protecteur en plastique (4, 4', 4") selon la revendication précédente, **caractérisé en ce que** ledit élément de liaison du bras (32) est une structure avec une section transversale en U constituée de deux parois latérales (321) et d'une paroi supérieure (322).

4. Couvercle protecteur en plastique (4, 4', 4") selon l'une quelconque des revendications précédentes, **caractérisé en ce que** ladite jupe (41,41',41") est préférablement sous forme d'un cylindre creux.

5. Couvercle protecteur en plastique (4, 4', 4") selon la revendication précédente, **caractérisé en ce que** ledit bras de liaison (42) s'étend à partir des parois latérales (411, 412) de la jupe (41) vers le centre de la jupe (41).

6. Couvercle protecteur en plastique (4) selon l'une quelconque des revendications précédentes, **caractérisé en ce qu'**une surface verticale d'appui (420) est prévue à l'extrémité dudit bras de liaison (42).

7. Couvercle protecteur en plastique (4) selon l'une quelconque des revendications précédentes, **caractérisé en ce qu'**une surface horizontale d'appui (421) est prévue sur ledit bras de liaison (42).

8. Couvercle protecteur en plastique (4) selon l'une quelconque des revendications précédentes, **caractérisé en ce que** ledit bras de liaison (42) possède une configuration qui peut s'étendre sans être endommagée pendant la procédure de montage.

9. Couvercle protecteur en plastique (4) selon la revendication précédente, **caractérisé en ce que** ledit bras de liaison (42) a un corps sinueux (423) ayant au moins une courbe.

10. Couvercle protecteur en plastique (4) selon l'une quelconque des revendications précédentes, **caractérisé en ce que** l'extrémité dudit bras de liaison (42) est intégrée avec un collier interne (43).

11. Couvercle protecteur en plastique (4) selon la revendication précédente, **caractérisé en ce que** ledit collier interne (43) présente une structure creuse annulaire.

12. Couvercle protecteur en plastique (4) selon la revendication précédente, **caractérisé en ce que** le couvercle protecteur en plastique (4) est monté par encliquetage à un boitier (6) prévu sur ledit élément de liaison du bras (32).

13. Couvercle protecteur en plastique (4) selon la revendication précédente, **caractérisé en ce que** le couvercle protecteur en plastique (4) est monté audit boitier (6) en étant forcé depuis le coté inférieur ouvert dudit élément de liaison du bras (32).

14. Couvercle protecteur en plastique (4) selon l'une quelconque des revendications précédentes, **caractérisé en ce que** ledit boitier (6) est constitué par une cavité (60) prévue sur la paroi supérieure (322) de l'élément de liaison du bras (32) et une paroi (61) de la cavité (60) s'étendant vers l'arbre (5).

15. Couvercle protecteur en plastique (4) selon la revendication précédente, **caractérisé en ce que** les surfaces verticales d'appui (420) s'engagent avec la paroi (61) de ladite cavité (60) lors de la procédure de montage, alors que les bras (42) sont un peu étendus et comprimés grâce à leur structure flexible.

16. Couvercle protecteur en plastique (4) selon la revendication précédente, **caractérisé en ce que** les surfaces verticales d'appui (420) saisissent la paroi (61) de la cavité (60) de façon périphérique, tandis que les bras (42) comprimés lors de la procédure de montage tentent de retourner comme un ressort à leur état initial.

17. Couvercle protecteur en plastique (4) selon l'une quelconque des revendications précédentes, **caractérisé en ce qu'**à l'état monté, lesdites surfaces horizontales d'appui (421) sont en appui sur la surface interne (3220) de la paroi supérieure (322) de l'élément de liaison du bras (32).

18. Couvercle protecteur en plastique (4) selon l'une quelconque des revendications précédentes, **caractérisé en ce qu'**à l'état monté,
la surface supérieure (4110) de ladite paroi latérale courte (411) est en appui sur la surface inférieure (3210) de la paroi latérale (321) de l'élément de liaison du bras (32) et
la surface supérieure (4120) de ladite paroi latérale longue (412) est en appui sur la surface interne (3220) de la paroi supérieure (322) de l'élément de liaison du bras (32).

19. Couvercle protecteur en plastique (4) selon l'une quelconque des revendications précédentes, **caractérisé en ce qu'**en état monté, lesdites parois latérales (411, 412) recouvrent l'écart (A) entre l'élément de liaison du bras (32) et le point final (70) du palier de l'arbre (7) et isolent la liaison entre l'arbre (5) et l'élément de liaison (32) du bras d'essuie-glace contre les effets externes.

20. Couvercle protecteur en plastique (4', 4") selon la revendication 2 ou la revendication 3, **caractérisé en ce que** ledit bras de liaison (42', 42") comprend une base (422', 422") intégrée à la surface externe (410', 410") de la jupe (41', 41"), un corps (423', 423") s'étendant vers le haut depuis ladite jupe (41', 41") et une griffe (424', 424") prévue à l'extrémité dudit corps (423', 423").

21. Couvercle protecteur en plastique (4') selon la revendication 21, **caractérisé en ce que** ladite griffe (424') est une saillie s'étendant vers le centre de ladite jupe (41').

22. Couvercle protecteur en plastique (4") selon la revendication 21, **caractérisé en ce que** ladite griffe (424") est une saillie s'étendant à l'extérieur de ladite jupe (41").

23. Couvercle protecteur en plastique (4') selon la revendication 22, **caractérisé en ce que** le couvercle protecteur en plastique (4') est lié à l'élément de liaison du bras (32) car lesdites griffes (424') entrent le long de la surface externe (3211) de la paroi latérale (321) de l'élément de liaison du bras (32) et s'accrochent aux ouvertures (3213) prévues sur la paroi latérale (321).

24. Couvercle protecteur en plastique (4") selon la revendication 23, **caractérisé en ce que** le couvercle protecteur en plastique (4") est lié à l'élément de liaison du bras (32) car lesdites griffes (424") entrent le long de la surface interne (3212) de la paroi latérale (321) de l'élément de liaison du bras (32) et s'accrochent aux ouvertures (3213) prévues sur la paroi latérale (321).

25. Couvercle protecteur en plastique (4, 4', 4") selon l'une quelconque des revendications précédentes, **caractérisé en ce que** le couvercle protecteur en plastique (4, 4', 4") est produit par un procédé d'injection de matières plastiques.

26. Couvercle protecteur en plastique (4, 4', 4", 4"') selon l'une quelconque des revendications précédentes, **caractérisé en ce que** le couvercle protecteur en plastique (4, 4', 4") est produit à partir des matières thermoplastiques tel que polyamide (PA), polyphthalamide (PPA), sulfure de polyphénylène (PPS), polypropylène (PP), polyéthylène (PE), élastomère thermoplastique (TPE), etc.

27. Couvercle protecteur en plastique (4, 4', 4") selon l'une quelconque des revendications précédentes, **caractérisé en ce que** lesdits bras de liaison (42, 42', 42") sont disposés aux intervalles angulaires égaux.

28. Couvercle protecteur en plastique (4, 4', 4") selon l'une quelconque des revendications précédentes, **caractérisé en ce que** lesdits bras de liaison (42, 42', 42") sont disposés aux intervalles angulaires différents.

29. Couvercle protecteur en plastique (4, 4', 4") selon l'une quelconque des revendications précédentes, **caractérisé en ce que** le nombre desdits bras de liaison (42, 42', 42") est entre 3 et 12.
